# FASCICULE DE BREVET EUROPEEN

(11) **EP 3 946 810 B1**
(45) Date de publication et mention de la délivrance du brevet: **28.01.2026**
(21) Numéro de dépôt: 20715061.6
(22) Date de dépôt: 30.03.2020
(51) Int. Cl.: B24C 5/04, B05B 7/06, B05B 7/14, B33Y 80/00

(54) **BUSE POUR SYSTÈME DE PULVÉRISATION ET SYSTÈME DE PULVÉRISATION COMPRENANT UNE TELLE BUSE**
DÜSE FÜR EIN SPRÜHSYSTEM UND SPRÜHSYSTEM MIT EINER SOLCHEN DÜSE
NOZZLE FOR A SPRAYING SYSTEM AND SPRAYING SYSTEM COMPRISING SUCH A NOZZLE

(30) Priorité: 02.04.2019 FR 1903524
(43) Date de publication de la demande: 09.02.2022
(73) Titulaire: Gomez, Philippe Emmanuel Christophe, 93290 Tremblay-en-France (FR)
(72) Inventeur: Gomez, Philippe Emmanuel Christophe, 93290 Tremblay-en-France (FR)
(74) Mandataire: Gevers & Orès
(86) Numéro de dépôt international: PCT/EP2020/058960
(87) Numéro de publication internationale: WO 2020/201215

(56) Documents cités:
- DE-U1- 20 214 063
- US-A- 5 601 478
- US-A- 6 053 803
- US-A1- 2004 140 374
- US-A1- 2009 197 512
- US-B1- 6 168 503
- US-B2- 9 844 890

## Description

La présente invention concerne une buse pour système de pulvérisation ainsi qu'un système de pulvérisation comprenant une telle buse. Il pourra en particulier s'agir d'une buse destinée à la projection d'abrasif en vue d'opération de nettoyage de surfaces.

Il est connu de nombreuses buses de nettoyage par aspersion d'abrasif fonctionnant par aspiration de l'abrasif dans la buse par effet Venturi, à l'aide d'un flux sous pression. L'abrasif est accéléré par le flux sous pression pour être projeté sur la surface à nettoyer. Un autre exemple de buse est par ailleurs donné dans US 2009/197512 A1 qui divulgue une buse pour la projection d'un flux de neige carbonique à l'aide de flux vecteur. Le flux de neige carbonique est centré sur des passages de flux vecteur répartis angulairement autour du flux de neige carbonique.

Cependant, les buses actuellement utilisées présentent une durée de vie réduite sous l'effet de l'usure provoquée par la circulation de l'abrasif à haute vitesse dans la buse. De telles buses doivent donc être fabriquées à l'aide de matériau particulièrement résistant tel que le carbure de bore, ce qui renchérit leur coût, sans d'ailleurs garantir des durées de vie réellement satisfaisantes.

L'invention vise à pallier au moins en partie les inconvénients mentionnés plus haut et propose à cette fin une buse pour système de pulvérisation selon la revendication 1. Le terme « débouche » signifie « débouche à l'extérieur de la buse ».

Ainsi, selon l'invention, le premier flux rencontre les lames de seconds flux en sortie des canaux en créant une interface entre le premier flux et les lames du second flux, situées de part et d'autre du premier flux. De la sorte, le premier flux est accéléré par les lames de second flux. Autrement dit, selon l'invention, le premier flux est aspiré, par exemple selon un effet Venturi, par le second flux et ceci en sortie des canaux, c'est-à-dire à pression atmosphérique.

Il a été constaté par le déposant que, grâce à une telle buse, le premier flux reste à une vitesse relativement faible tout le long de sa circulation dans la buse. Dans l'hypothèse d'un premier flux chargé en abrasif, l'usure de la buse est de la sorte très limitée, ce qui permet d'utiliser des matériaux faiblement résistant et donc peu onéreux. Toujours dans la même hypothèse, l'invention permet en outre d'avoir un flux d'abrasif en sortie restant concentré dans un angle solide limité grâce aux interfaces créées par les lames de second flux. Par ailleurs, puisque l'alimentation en premier flux se fait par aspiration, le premier flux pourra provenir d'un circuit qui n'a pas besoin d'être sous pression, par exemple le premier flux pourra provenir d'un circuit à pression atmosphérique. Cela étant, toujours selon l'invention, l'alimentation en premier flux pourra avoir lieu sous pression, notamment une pression inférieure à celle du premier flux.

Selon différentes caractéristiques supplémentaires de l'invention, qui pourront être prises séparément ou selon toute combinaison techniquement possible:
- lesdits canaux sont configurés pour que les deux lames de second flux soient soniques et/ou supersoniques en sortie desdits canaux,
- lesdits canaux sont configurés pour que les deux lames de second flux soient symétriques,
- lesdits canaux sont configurés pour que le premier flux comprenne un matériau abrasif,
- lesdits canaux sont configurés pour que le second flux comprenne un fluide sous pression, notamment de l'air, de l'azote et/ou de l'hélium sous pression,
- lesdits second canaux présente une sortie respective située dans un même plan, dit plan de sortie,
- le premier canal présent une sortie située sensiblement dans le plan de sortie,
- lesdits deuxièmes canaux sont symétriques,
- ledit premier canal s'étend selon un axe d'extension longitudinale de la buse,
- ledit corps comprend un conduit d'alimentation desdits deuxièmes canaux en second fluide,
- ledit conduit est orienté selon un axe d'extension longitudinale de la buse,
- ledit corps comprend une chambre d'alimentation de la buse en premier fluide,
- ladite chambre d'alimentation est située dans le conduit d'alimentation en second fluide,
- ladite chambre d'alimentation présente une configuration en entonnoir en direction du premier canal,
- ledit premier canal présente une section constante,
- lesdits deuxièmes canaux présentent un col situé au voisinage d'une entrée du premier canal,
- lesdits deuxièmes canaux s'étendent selon une direction légèrement convergente avec ledit axe d'extension longitudinale,
- ledit corps comprend une bouche de sortie, située dans le prolongement desdits canaux,
- ladite bouche de sortie présente une configuration divergente,
- ledit corps comprend une ou des cloisons séparant le premier flux et le second flux,
- la ou lesdites cloisons présentent une extrémité distale arrondie donnant à une extrémité distale des deuxièmes canaux une configuration évasée en direction du flux de premier fluide en sortie du premier canal,
- les deuxièmes canaux présentent une section limitée,
- ledit corps est obtenu par synthèse additive.

L'invention concerne également un système de pulvérisation pour système de nettoyage sous pression comprenant une buse telle que décrite plus haut. D'autres caractéristiques et avantages de l'invention apparaîtront à la lecture de la description détaillée qui suit pour la compréhension de laquelle on se reportera aux figures annexées parmi lesquelles :
[Fig.1] la figure 1 illustre en perspective un exemple de réalisation du la buse conforme à l'invention,
[Fig.2] la figure 2 est une vue de face illustrant en transparence l'intérieur de la buse de la figure 1,
[Fig.3] la figure 3 est une vue de coupe illustrant l'extrémité distale d'une buse conforme à l'invention, la coupe étant réalisée dans un plan parallèle à celui de réalisation de la figure 2,
[Fig.4] la figure 4 illustre, selon une simulation numérique, la circulation de fluide en sortie d'une buse conforme à l'invention, la vue étant réalisée selon un plan de coupe identique à celui de la figure 4,
[Fig.5] la figure 5 illustre, selon une simulation numérique, la circulation de fluide en sortie de la buse de la figure 4, la vue étant réalisée selon un plan de coupe repéré V-V à la figure 3,
[Fig.6] la figure 6 illustre, selon une simulation numérique, la circulation d'abrasif en sortie de la buse des figures 4 et 5, la vue étant réalisée selon un plan de coupe identique à celui des figures 3 et 5,

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

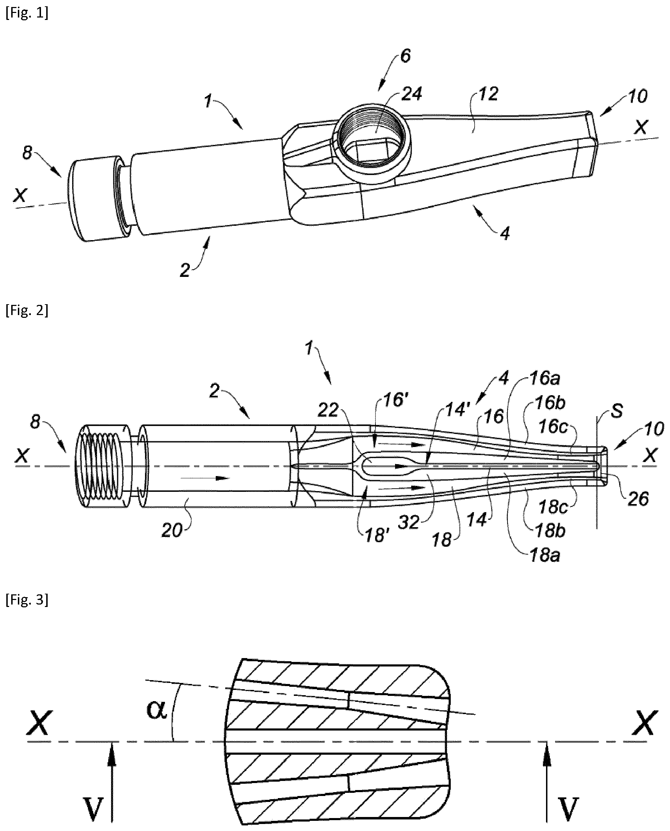

Comme illustré à la figure 1, l'invention concerne une buse pour un système de pulvérisation. Il s'agit, par exemple, d'une buse pour le nettoyage de surface bien que de nombreuses autres applications puissent être envisagée.

Ladite buse permet en particulier la pulvérisation de matériaux abrasifs et/ou de liquide, tel que de l'eau, accélérés par un flux vecteur tel qu'un flux d'air. Dans le cas de la pulvérisation d'un mélange d'abrasif et de liquide, la buse conforme à l'invention permet de réaliser un hydro gommage. Le flux vecteur pourra aussi comprendre un media tel que de la glace carbonique, notamment pour un nettoyage cryogénique avec abrasif.

Ladite buse comprend un corps 1 présentant préférentiellement une extension longitudinale selon un axe X-X. Ledit corps comprend, par exemple, une partie proximale 2, présentant ici une configuration de révolution autour de l'axe X-X, et une partie distale 4, présentant ici une configuration à plusieurs faces et de section droite décroissante.

Dans l'exemple illustré, ledit corps comprend une première entrée 6 pour un premier flux, une deuxième entrée 8 pour un second flux et une sortie 10 de flux.

La deuxième entrée 8 est ici située à une extrémité proximale de la buse et la sortie 10 à une extrémité distale. La deuxième entrée 8 pourra présenter un taraudage permettant de raccorder la buse à un circuit d'alimentation en second flux.

La première entrée 6 est située sur l'une 12 des faces latérales de la partie distale 4, à proximité de la partie proximale 2. La première entrée 6 présente ici une configuration en forme de puit. Elle pourra présenter un taraudage permettant de raccorder la buse à un circuit d'alimentation en premier flux. Comme illustré à la figure 2, ledit corps 1 de la buse définit des canaux 14, 16, 18, de circulation du premier flux et du second flux.

Plus précisément, ledit corps 1 comprend un premier canal 14 pour le premier flux et deux deuxièmes canaux 16, 18 pour le second flux, situés de part et d'autre du premier canal 14. Ledit premier canal 14 frome de la sorte un canal central et s'étend ici selon l'axe d'extension longitudinale X-X de la buse. Sur la figure, les deuxièmes canaux 16, 18 sont situés au-dessus et en dessous du premier canal 14 et s'étendent le long de celui-ci. Ledit corps 1 comprend un conduit 20 d'alimentation desdits deuxièmes canaux 16, 18 en second fluide. Il s'étend dans la partie proximale 2 de la buse entre la deuxième entrée 8 et des entrée 16', 18' des deuxièmes canaux.

Ledit corps 1 comprend en outre une chambre 22 d'alimentation de la buse en premier fluide. Selon le mode de réalisation illustré, dans une première direction, ladite chambre d'alimentation 22 s'étend transversalement, notamment orthogonalement, à l'axe X-X, ceci à partir de la première entrée 6. Dans une seconde direction, elle s'étend longitudinalement selon l'axe X-X pour déboucher dans une entrée 14' du premier canal 14.

Ladite chambre d'alimentation 22 présente avantageusement une configuration en entonnoir en direction du premier canal 14. Ceci favorise une répartition homogène du premier flux sur toute la section du premier canal 14.

Ladite chambre d'alimentation 22 présente ici une configuration cylindrique d'axe orthogonal à l'axe longitudinal X-X de la buse et de section oblongue avec un grand axe orienté selon l'axe X-X. Selon cette direction, ladite chambre d'alimentation 22 présente de la sorte des extrémités arrondies dont l'une forme l'entonnoir évoqué plus haut.

En se reportant de nouveau à la figure 1, on constate que le puit formé par la première entrée 6 s'étend en communication avec ladite chambre d'alimentation 22 depuis la face latérale 12 de la buse dont une partie forme un fond 24 du puit. Ladite chambre d'alimentation 22 débouche au niveau dudit fond 24.

Ici, une dimension longitudinale de ladite chambre d'alimentation 22 est sensiblement identique à un diamètre interne du puit.

En se reportant de nouveau à la figure 2, on constate que ladite chambre d'alimentation 22 est située dans le conduit d'alimentation 20 en second fluide au niveau des entrées 16', 18' des deuxièmes canaux 16, 18.

Selon l'invention, lesdits canaux 14 ,16, 18 sont configurés pour que le premier flux débouche entre au moins deux lames du second flux en sortie desdits canaux 14, 16, 18 et pour que l'une au moins des lames de second flux, avantageusement les deux, présente une vitesse sonique et/ou supersonique en sortie desdits canaux 14, 16, 18, notamment de l'ordre de Mach 2.

Grâce à une telle configuration, le premier flux est accéléré à forte vitesse en sortie, par exemple à 350 m/s dans les simulations réalisées, et ceci alors que le premier flux circule à relativement faible vitesse dans la buse, par exemple de 50 à 70 m/s dans les simulations réalisées. Il y a donc très peu d'usure de la buse.

Sans que ceci prétende être une explication complète des phénomènes en cause, chaque lame de second fluide forme avec le premier flux une interface dont au moins l'une, voire les deux, circulent à haute vitesse. Le premier flux se trouve de la sorte entrainé par lesdites lames de second flux. On observe ainsi un phénomène d'aspiration du type Venturi mais n'intervenant qu'en sortie de la buse et donc à pression atmosphérique. L'essentiel de l'accélération du premier fluide sous l'effet du second n'intervient donc qu'en aval de la buse.

Il est d'ailleurs à noter qu'un autre avantage de l'invention est qu'il n'est pas nécessaire que le premier flux soit alimenté sous pression. On observe même que l'effet d'aspiration obtenu pourra être suffisant pour permettre l'emploi d'un circuit d'alimentation du premier flux qui soit de longueur adéquate pour une utilisation industrielle. Des flexibles de grandes longueur pourront donc être raccordés à la première entrée 6, même sans avoir recours à un circuit d'alimentation sous pression. Cela étant, toujours selon l'invention, l'alimentation en premier flux pourra avoir lieu sous pression, notamment une pression inférieure à celle du premier flux, par exemple une pression inférieure à 3 bars, voire à 2 bars.

Grâce au phénomène d'interface entre le premier flux et les lames de second flux, il est encore à noter que, en sortie, la partie du flux issue du premier flux, et donc l'abrasif le cas échéant, est concentré dans un angle solide limité, ce qui sera favorable à la précision du nettoyage.

Ainsi, grâce l'invention, l'usure de la buse est diminuée et le nettoyage plus efficace.

Préférentiellement, lesdits canaux 14, 16, 18 sont configurés pour que les deux lames de second flux soient symétriques. Ceci permet un meilleur contrôle du flux en sortie.

Préférentiellement, comme on l'aura compris, lesdits canaux 14, 16, 18 sont configurés pour que le premier flux soit un mélange d'air et de matériaux abrasifs, à accélérer, et le deuxième flux soit formé d'un flux d'air définissant le flux vecteur. Comme déjà dit, en variante, le premier flux pourra être un flux d'eau ou d'un autre fluide. Il pourra aussi être un flux d'un mélange abrasif/liquide tel qu'un mélange abrasif/eau, notamment pour réaliser un hydro gommage. Selon une autre variante, le second flux contient aussi un media tel que de la glace carbonique, notamment pour un nettoyage cryogénique avec ou sans abrasif.

Préférentiellement, ledit premier canal 14 présente une section constante. Ceci permet d'éviter de perturber l'écoulement du premier fluide, en particulier de l'abrasif quand la buse conforme à l'invention est employée à cette fin.

A nouveau préférentiellement, lesdits canaux 14, 16, 18 sont configurés pour que le second flux soit un flux sous pression, par exemple une pression de l'ordre de 6 bars.

Lesdits deuxièmes canaux 16, 18 présentent une configuration de tuyère de Laval. Leur section est ici rectangulaire, de longueur constante et de hauteur/largeur variable de manière à former un convergent 16a, 18a, un col 16b, 18b et un divergent 16c, 18c, ceci dans le sens d'écoulement du second flux. L'angle de divergent est préférentiellement compris entre 10 et 15°. Le conduit 20 d'alimentation desdits deuxièmes canaux débouche de la sorte dans le convergent 16a, 18a des deuxième canaux 16, 18. A l'autre extrémité desdits seconds canaux 16, 18, ces derniers présentent une sortie respective située dans un même plan, dit plan de sortie, repéré S sur la figure. Ledit plan de sortie S est, par exemple, sensiblement orthogonal à la direction d'extension longitudinale X-X de la buse. En outre, ici le premier canal 14 présente une sortie située sensiblement dans le plan de sortie S.

Dans le mode de réalisation illustré, le col 16b, 18b desdits deuxièmes canaux est situé à proximité du plan de sortie et la longueur de leur divergent 16c, 18c est relativement faible, en particulier par rapport à leur longueur du convergent 16a, 18a.

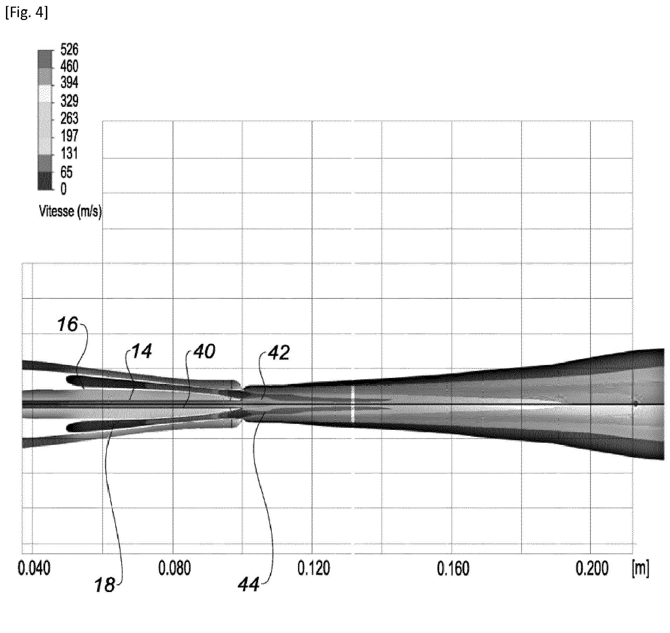

Dans un autre mode de réalisation non illustré mais préférentiel, le col 16b, 18b desdits deuxièmes canaux est situé au voisinage d'une entrée du premier canal 14. Il a en effet été constaté que plus la distance entre le col et la sortie est grande, plus le spectre de vitesse du premier flux, en particulier de l'abrasif, dans le prolongement de l'axe longitudinale de la buse, en sortie de la buse, est favorable, comme cela sera commenté en relation avec les figures 4 à 6.

A la figure 3, on constate que lesdits deuxièmes canaux 16, 18 s'étendent selon une direction légèrement convergente avec ledit axe d'extension longitudinale X-X et donc avec ledit premier canal 14. L'angle α formé entre lesdits deuxièmes canaux 16, 18 et le premier canal 14 est compris, par exemple, entre 1 et 3°. Il est en particulier d'environ 2°. Dans le cas de premiers et seconds canaux 14, 16, 18 parallèles entre eux, le début de la zone de maximum de vitesse du premier flux, en particulier de l'abrasif, en aval de la buse commence à une distance trop éloignée de la buse. Avec une légère inclinaison, tel que celle évoquée plus haut, le début de la zone de maximum de vitesse se rapproche, ce qui est favorable. A l'inverse, si l'inclinaison est trop forte, on risque alors de constater un retour d'air dans le premier canal 14.

En se reportant de nouveau à la figure 2, on constate que ledit corps 1 comprend, préférentiellement, une bouche de sortie 26, située dans le prolongement desdits canaux 14, 16, 18. Ladite bouche 26 permet tout d'abord d'éviter que l'air ambiant ne perturbe l'écoulement des flux. En outre, en sortie des premier et deuxième canaux, le premier flux est certes pris en sandwich entre les lames de second flux, ceci au-dessus et en-dessous, mais cela n'est pas le cas sur les côtés. En l'absence de ladite bouche de sortie 26, il y aurait ainsi une dépression et à nouveau un risque de retour d'air dans premier canal 14. Ladite bouche 26 permet d'éviter un tel phénomène.

Ladite bouche de sortie 26 présente avantageusement une configuration divergente le long de l'axe longitudinale X-X selon le sens d'écoulement des flux. Cette divergence est obtenue, par exemple, par l'orientation de parois haute et basse de ladite bouche. A la figure 2, une telle divergence n'est constatée que sur une partie distale de la bouche 26 mais pourra avoir lieu sur toute l'étendue axiale de la bouche, depuis le plan de sortie S jusqu'à une extrémité distale de sortie de ladite bouche 26. Lesdites parois haute et basse forment alors, par exemple, un angle constant avec ledit axe longitudinal. La divergence de la bouche de sortie 26 permet une expansion des jets supersoniques formés par les lames de second flux en sortie de la buse.

Ledit corps 1 comprend une ou des cloisons 32, ici deux cloisons; séparant respectivement le premier flux et chacune des lames de second flux. La ou lesdites cloisons 32 définissent une des parois des second canaux 16, 18, la paroi opposée étant respectivement formée par l'une des faces latérales de la partie distale 4 de la buse. Elle définissent également des parois opposées du premier canal 14. Lesdites cloisons sont ici formées dans la continuité de parois de la chambre d'admission 22.

Préférentiellement, la ou lesdites cloisons 32 présentent une extrémité distale arrondie, notamment en forme de lèvre, donnant à une extrémité distale des deuxièmes canaux 16, 18 une configuration évasée en direction du premier flux en sortie du premier canal 14. Une telle configuration facilite une expansion des flux supersoniques l'un vers l'autre en sortie des seconds canaux 16, 18.

Des simulations de fonctionnement ont été réalisées avec une buse conforme à l'invention. Le premier flux est un flux d'air chargé d'abrasif et les lames de second flux sont formées d'un flux d'air. Les résultats sont données aux figures 4 à 6.

A la figure 4, on observe le premier flux 40 et les deux lames 42, 44 de second flux. Le premier flux reste à une vitesse limitée dans la buse, inférieure à 100 m/s. Il est accéléré à plus de 300 m/s juste en aval de la buse, à savoir moins d'un centimètre en aval de la buse.

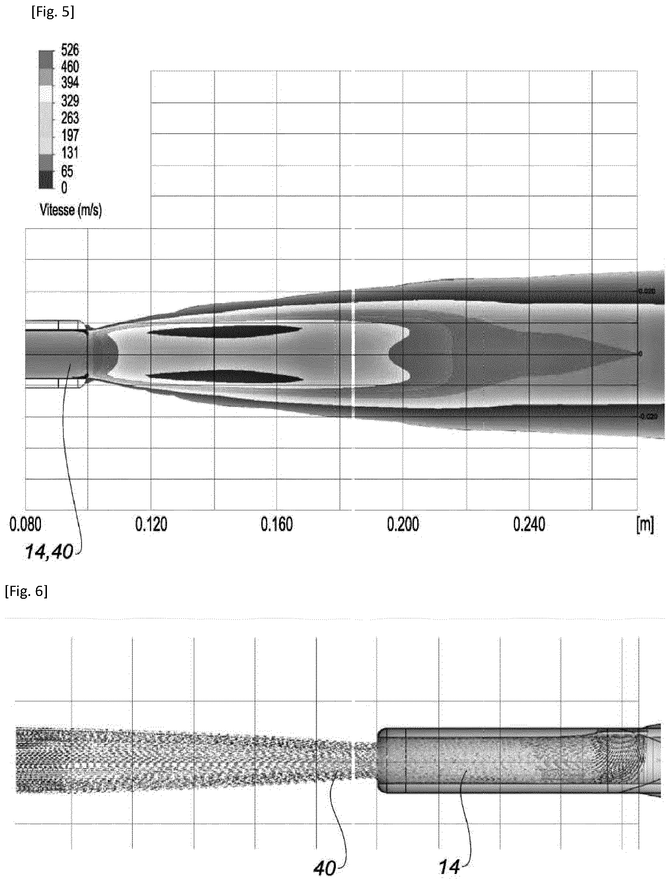

A la figure 5, on constate que la vitesse atteint son maximum 25 mm en aval de la sortie des canaux 14, 16, 18 et reste maximum pendant 50 mm, soit jusqu'à 75 mm en aval de la sortie des canaux 14, 16, 18.

A la figure 6, on constate que le flux d'abrasif reste concentré, le cône d'aspersion étant relativement resserré.

Cela étant, les deuxièmes canaux 16, 18 présentent préférentiellement une section limitée. Il est de la sorte possible d'éviter de une surconsommation d'air et de devoir employer un compresseur d'air sur dimensionné pour l'alimentation en air des seconds canaux.

Il est à noter que, dans le mode de réalisation illustré, lesdits deuxièmes canaux 16, 18 sont préférentiellement symétriques. Le premier canal 14 el lesdits seconds canaux 16, 18 présentent présente ici une configuration générale symétrique par rapport un plan passant par l'axe longitudinal X-X.

En variante, il est possible d'envisager une configuration de révolution pour la circulation du second fluide pour autant qu'une telle configuration permette la formation des deux lames de second flux de part et du premier flux en sortie de la buse.

Il est encore à noter que ledit corps 1 est avantageusement obtenu par synthèse additive et/ou impression 3D. Un tel mode de fabrication est rendu possible car l'emploi d'un grand nombre de matériaux, et donc de matériaux compatibles avec une impression 3D, peut avoir lieu avec la buse conforme à l'invention car, comme expliqué plus haut, elle n'est soumise qu'à une très faible usure. L'invention concerne encore un système de pulvérisation pour système de nettoyage sous pression comprenant une buse telle que décrite plus haut. Bien que non illustré, ledit système comprend un circuit d'alimentation en premier fluide, relié à la première entrée de la buse et/ou un système d'alimentation en second fluide, relié à la second entrée de la buse. Le premier circuit comprend par exemple un réceptacle de matériau abrasif et un flexible reliant ledit réceptacle à ladite première entrée. Le second circuit comprend par exemple un compresseur d'air et un conduit reliant ledit compresseur à la seconde entrée.

La présente invention a été décrite en relation avec des modes de réalisations spécifiques, qui ont une valeur purement illustrative et ne doivent pas être considérés comme limitatifs. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Buse pour système de pulvérisation comprenant un corps (1) définissant des canaux (14, 16, 18) de circulation d'un premier flux et d'un second flux, lesdits canaux (14, 16, 18) étant configurés pour que le premier flux débouche à l'extérieur de la buse entre deux lames du second flux en sortie desdits canaux (14, 16, 18) et pour que l'une au moins des lames de second flux présente une vitesse sonique et/ou supersonique en sortie desdits canaux, ledit corps (1) comprenant un premier canal (14) pour le premier flux et deux deuxièmes canaux (16, 18) pour le second flux, situés de part et d'autre du premier canal (14), **caractérisée en ce que**
lesdits deuxièmes canaux (16, 18) présentant une configuration de tuyère de Laval.

2. Buse selon la revendication 1 dans laquelle lesdits canaux (14, 16, 18) sont configurés pour que les deux lames de second flux soient soniques et/ou supersoniques en sortie desdits canaux.

3. Buse selon l'une quelconque des revendications précédentes dans laquelle lesdits canaux (14, 16, 18) sont configurés pour que les deux lames de second flux soient symétriques.

4. Buse selon l'une quelconque des revendications précédentes dans laquelle lesdits canaux (14, 16, 18) sont configurés pour que le premier flux comprenne un matériau abrasif et/ou le second flux comprenne un fluide sous pression.

5. Buse selon l'une quelconque des revendications précédentes dans laquelle lesdits deuxièmes canaux (16, 18) sont symétriques et/ou ledit premier canal (14) s'étend selon un axe d'extension longitudinale (X-X) de la buse.

6. Buse selon l'une quelconque des revendications précédentes dans laquelle lesdits second canaux (16, 18) présentent une sortie respective située dans un même plan (S), dit plan de sortie, et le premier canal (14) présente une sortie située sensiblement dans le plan de sortie (S).

7. Buse selon l'une quelconque des revendications précédentes dans laquelle ledit corps (1) comprend une chambre d'alimentation (22) de la buse en premier fluide, ladite chambre d'alimentation (22) présentant une configuration en entonnoir en direction du premier canal (14).

8. Buse selon l'une quelconque des revendications précédentes dans laquelle lesdits deuxièmes canaux (16, 18) présentent un col (16b, 18B) situé au voisinage d'une entrée (14') du premier canal (14).

9. Buse selon l'une quelconque des revendications précédentes dans laquelle lesdits deuxièmes canaux (16, 18) s'étendent selon une direction légèrement convergente avec ledit axe d'extension longitudinale.

10. Buse selon l'une quelconque des revendications précédentes dans laquelle ledit corps (1) comprend une bouche de sortie (26), située dans le prolongement desdits canaux (14, 16, 18).

11. Buse selon la revendication 10 dans laquelle ladite bouche de sortie (26) présente une configuration divergente.

12. Buse selon l'une quelconque des revendications précédentes dans laquelle ledit corps (1) est obtenu par synthèse additive.

13. Système de pulvérisation pour système de nettoyage sous pression comprenant une buse selon l'une quelconque des revendications précédentes.

## Patentansprüche

1. Düse für ein Zerstäubungssystem, umfassend einen Körper (1), der Zirkulationskanäle (14, 16, 18) eines ersten Flusses und eines zweiten Flusses definiert, wobei die Kanäle (14, 16, 18) so konfiguriert sind, dass beim Verlassen der Kanäle (14, 16, 18) der erste Fluss an der Außenseite der Düse zwischen zwei Wellen des zweiten Flusses mündet, und so, dass mindestens eine der Wellen des zweiten Flusses beim Verlassen der Kanäle eine Schall- und/oder Überschallgeschwindigkeit aufweist, wobei der Körper (1) einen ersten Kanal (14) für den ersten Fluss und zwei zweite Kanäle (16, 18) für den zweiten Fluss umfasst, die sich beiderseits des ersten Kanals (14) befinden,
**dadurch gekennzeichnet, dass** die zweiten Kanäle (16, 18) eine Lavaldüsenkonfiguration aufweisen.

2. Düse nach Anspruch 1, wobei die Kanäle (14, 16, 18) so konfiguriert sind, dass die zwei Wellen des zweiten Flusses beim Verlassen der Kanäle mit Schall- und/oder Überschallgeschwindigkeiten vorliegen.

3. Düse nach einem der vorstehenden Ansprüche, wobei die Kanäle (14, 16, 18) so konfiguriert sind, dass die zwei Wellen des zweiten Flusses symmetrisch sind.

4. Düse nach einem der vorstehenden Ansprüche, wobei die Kanäle (14, 16, 18) so konfiguriert sind, dass der erste Fluss ein Schleifmaterial umfasst und/oder so, dass der zweite Fluss ein Fluid unter Druck umfasst.

5. Düse nach einem der vorstehenden Ansprüche, wobei die zweiten Kanäle (16, 18) symmetrisch sind und/oder der erste Kanal (14) sich entlang einer längsgerichteten Verlängerungsachse (X-X) der Düse erstreckt.

6. Düse nach einem der vorstehenden Ansprüche, wobei die zweiten Kanäle (16, 18) jeweils einen Auslass aufweisen, der sich in einer gleichen Ebene (S), der Auslassebene, befindet, und wobei der erste Kanal (14) einen Auslass aufweist, der sich im Wesentlichen in der Auslassebene (S) befindet.

7. Düse nach einem der vorstehenden Ansprüche, wobei der Körper (1) eine Zufuhrkammer (22) der Düse mit erstem Fluid umfasst, wobei die Zufuhrkammer (22) in Richtung des ersten Kanals (14) eine Trichterkonfiguration aufweist.

8. Düse nach einem der vorstehenden Ansprüche, wobei die zweiten Kanäle (16, 18) einen Hals (16b, 18B) aufweisen, der sich einem Einlass (14') des ersten Kanals (14) benachbart befindet.

9. Düse nach einem der vorstehenden Ansprüche, wobei sich die zweiten Kanäle (16, 18) entlang einer Richtung erstrecken, die zu der längsgerichteten Verlängerungsachse leicht konvergierend ist.

10. Düse nach einem der vorstehenden Ansprüche, wobei der Körper (1) eine Auslassmündung (26) umfasst, die sich in der Erweiterung der Kanäle (14, 16, 18) befindet.

11. Düse nach Anspruch 10, wobei die Auslassmündung (26) eine divergierende Konfiguration aufweist.

12. Düse nach einem der vorstehenden Ansprüche, wobei der Körper (1) durch additive Synthese erhalten wird.

13. Zerstäubungssystem für ein Reinigungssystem unter Druck, umfassend eine Düse nach einem der vorstehenden Ansprüche.

## Claims

1. A nozzle for a spray system comprising a body (1) defining channels (14, 16, 18) for the circulation of a first flow and a second flow, said channels (14, 16, 18) being configured so that the first flow opens outwards from the nozzle between two blades of the second flow at the outlet of said channels (14, 16, 18) and so that at least one of the blades of the second flow has a sonic and/or supersonic velocity at the outlet of said channels, said body (1) comprising a first channel (14) for the first flow and two second channels (16, 18) for the second flow, located on either side of the first channel (14), **characterized in that** said second channels (16, 18) have a Laval nozzle configuration.

2. The nozzle according to claim 1, wherein said channels (14, 16, 18) are configured so that the two second flow blades are sonic and/or supersonic at the outlet of said channels.

3. The nozzle according to any one of the preceding claims, wherein said channels (14, 16, 18) are configured so that the two second flow blades are symmetrical.

4. The nozzle according to any one of the preceding claims, wherein said channels (14, 16, 18) are configured such that the first flow comprises an abrasive material and/or the second flow comprises a pressurized fluid.

5. The nozzle according to any one of the preceding claims, wherein said second channels (16, 18) are symmetrical and/or said first channel (14) extends along a longitudinal extension axis (X-X) of the nozzle.

6. The nozzle according to any one of the preceding claims, wherein said second channels (16, 18) have a respective outlet located in the same plane (S), referred to as the outlet plane, and the first channel (14) has an outlet located substantially in the outlet plane (S).

7. The nozzle according to any one of the preceding claims, wherein said body (1) comprises a chamber (22) for supplying the nozzle with a first fluid, said supply chamber (22) having a funnel-shaped configuration in the direction of the first channel (14).

8. The nozzle according to any one of the preceding claims, wherein said second channels (16, 18) have a neck (16b, 18B) located in the vicinity of an inlet (14') of the first channel (14).

9. The nozzle according to any one of the preceding claims, wherein said second channels (16, 18) extend in a direction slightly convergent with said longitudinal extension axis.

10. The nozzle according to any one of the preceding claims, wherein said body (1) comprises an outlet (26) located in the extension of said channels (14, 16, 18).

11. The nozzle according to claim 10, wherein said outlet (26) has a divergent configuration.

12. The nozzle according to any one of the preceding claims, wherein said body (1) is obtained by additive synthesis.

13. A spray system for a pressure cleaning system comprising a nozzle according to any one of the preceding claims.
